# EUROPEAN PATENT SPECIFICATION

(11) **EP 1 344 793 B1**
(45) Date of publication and mention of the grant of the patent: **07.06.2006**
(21) Application number: 02005953.1
(22) Date of filing: 15.03.2002
(51) Int. Cl.: C08K 5/00, C08K 5/20, C08L 23/10

(54) **Polyolefin composition with improved properties**
Polyolefinmischung mit verbesserten Eigenschaften
Composition de polyolèfines ayant des propriétés améliorées

(43) Date of publication of application: 17.09.2003
(73) Proprietor: Borealis Technology Oy, 06101 Porvoo (FI)
(72) Inventor: Bernreitner, Klaus, 4010 Linz (AT); Hauer, Andreas, 4203 Altenberg (AT); Gubo, Robert, 4730 Waizenkirchen (AT)
(74) Representative: VA TECH Patente GmbH & Co

(56) References cited:
- EP-A- 0 682 066
- DE-B- 1 188 279
- US-A- 5 310 584

## Description

The present invention relates to a polyolefin composition with improved impact strength and improved optical properties. More particularly the invention relates to polyolefin compositions, especially compositions comprising heterophasic propylene copolymers with improved impact strength at temperatures below room temperature, especially at temperatures below 0 °C, having improved optical properties, especially improved gloss. The present invention also relates to a process for producing the polyolefin compositions.

The polyolefin composition of the invention are especially useful for applications where high mechanical and optical requirements must be simultaneously met, e.g. for housings for household and electric appliances.

### Background of the invention

Heterophasic propylene copolymers are well established in a lot of applications because of their good stiffness/impact ratio together with good flowability. Heterophasic polymers are polymers having a matrix phase and a disperse phase. The matrix phase is usually a propylene homopolymer or propylene/ethylene and/or α-olefin copolymer phase and the disperse phase is usually an ethylene/α-olefin rubber copolymer. Impact strength is mainly influenced by the amount of rubber and its molecular weight. Most applications require a medium to high molecular weight of the rubber in order to achieve sufficent impact strength, especially at lower temperatures.

EP-A-682066 describes heterophasic copolymers of 2 % ethylene content and MFR of 3.2 g/10min β-nucleated with C1-pimelate

DE-A-1188279 describes blends of propylene homopolymer and rubbery ethylene copolymer β-nucleated with chinacrilone derivatives

US-A-5310584 descitbes β-nucleating agents for polypropylene

It is, however, well known, that propylene copolymers with a medium to high molecular mass rubber usually exhibit a non-glossy surface appearance, whereas materials with a low molecular weight have a glossy surface.

For applications like housings for household and electrical appliances, both features are required, i.e. high gloss, which is regarded as high surface esthetics, and high impact strength to prevent housing from getting broken easily. Since conventional propylene copolymers are not able to meet these requirements, ABS is used in most of the above mentioned applications.

### Object of the Invention

It is an object of the invention to provide a polyolefin composition for household and electric appliances with improved impact strength at ambient and low temperatures having improved optical properties, especially good gloss.

A further object of the invention is a process for producing a polyolefin composition for household and electric appliances with improved impact strength at low temperatures and good optical properties.

### Detailed description of the invention

The object of the invention has been achieved by providing a polyolefin composition which is comprised of a heterophasic propylene copolymer and a β-nucleating agent, where the intrinsic viscosity of the disperse phase of the heterophasic copolymer does not exceed a certan limit.

The present invention therefore relates to a polyolefin composition with high impact strength and high gloss, comprising
A) a heterophasic propylene copolymer containing
   a) 50 - 95 wt% of a matrix phase comprising a propylene homopolymer or a propylene copolymer with up to 5 mol% of ethylene and/or at least one C₄₋C₈ α-olefin and
   b) 5 - 50 wt% of a disperse phase comprising an ethylene rubber copolymer with from 20 - 80 mol% ethylene and from 80 - 20 mol% of at least one C₃₋C₈ α-olefin and where the intrinsic viscosity of the XCS-fraction of the heterophasic copolymer is s 2 dl/g and
B) a β-nucleating agent.

A polyolefin composition as above combines the good optical appearance, i.e. gloss of its surface, of a heterophasic copolymer with low molecular weight rubber (IV of XCS ≤ 2 dl/g) with the good impact strength, especially at low temperatures of a heterophasic copolymer with high molecular weight rubber.

This is achieved by an amount of β-nucleating agent and thereby causing at least a part of the matrix phase to crystallise in the hexagonal or pseudohexagonal β-modification.

For the ethylene rubber copolymer the ethylene content may range from 20-80 mol% preferably from 30-70 mol%, more preferably from 50-70 mol%. Accordingly, the C₃-C₈ α-olefin content may range from 80-20 mol%, preferably from 70-30 mol%, more preferably from 50-30 mol%.

According to a preferred embodiment the ethylene rubber copolymer is an ethylene propylene rubber (EPR).

EPR's are more cost-effective than ethylene rubbers with higher α-olefins and they can either be synthesised in the second step of a two-step process, where the first step synthesises the matrix polymer or they can be mixed with the matrix polymer in a separate melt blending step.

According to a further preferred embodiment the heterophasic propylene copolymer contains 7 - 25 wt%, preferably 9 -20 wt% of the ethylene rubber copolymer. These concentration ranges for the ethylene rubber are preferred, because they offer a good compromise for a good stiffness/impact strength/gloss balance.

In order to retain the good flowability of the polyolefin composition of the present invention it is preferred for it to have a MFR of from 1 - 30 g/10 min, preferably 2.5 - 10 g/10 min.

It has been found, that the effect of the β-nucleating agent, namely the increase in impact strength at low temperatures, is maximised with the above MFR-ranges. Generally, in order to observe a noticeable effect of the β-nucleating agent, it is necessary that the heterophasic copolymer contains a high amount (i.e. at the upper end of the given ranges) of rubber, when the MFR of the composition is at the upper end of the MFR-ranges given.

Experimental data also seem to indicate that, in order to observe a noticeable effect of the β-nucleating agent on low temperature impact strength, it is necessary that the MFR of the matrix phase is no more than 2 times higher than the MFR of the overall heterophasic copolymer. More preferably the MFR of the matrix phase is from 0.5 to 1.7 of the MFR of the overall heterophasic copolymer. Even more preferably the MFR of the overall heterophasic copolymer is about equal to that of the MFR of the matrix phase.

It is preferred that the intrinsic viscosity of the XCS-fraction of the heterophasic copolymer is from 0.9 - 1.8 dl/g.

Ethylene rubber copolymers with such low intrinsic viscosities are necessary for the polyeolefin composition to have sufficient gloss, i.e. above 60 %.

It is a known effect, that stiffness of a β-nucleated propylene polymer is lower than the stiffness of the unnucleated polymer. This can be counteracted by adding a stiffness-enhancing filler, e.g. talc.

It has been found that the stiffness decrease of the polyolefin compositions of the invention caused by β-nucleation can be compensated by very small amounts of stiffness-enhancing filler, which do not significantly influence the low-temperature impact strength or the gloss, but which are sufficient to raise stiffness to the previous unnucleated level.

Accordingly, it is preferred, that the polyolefin composition of the present invention comprises up to 7 wt%, preferably from 1 - 5 wt%, based on the total weight of the polyolefin composition of fillers for enhancing stiffness, preferably talc.

### Definition of β-nucleating agent

As β-nucleating agent any nucleating agent can be used which is suitable for inducing crystallisation of propylene homo- and copolymers in the hexagonal or pseudohexagonal modification. Mixtures of such nucleating agents may also be employed.

Suitable types of β-nucleating agents are
- dicarboxylic acid derivative type diamide compounds from C₅-C₈-cycloalkyl monoamines or C₆-C₁₂-aromatic monoamines and C₅-C₈-aliphatic, C₅-C₈₋cycloaliphatic or C₆-C₁₂-aromatic dicarboxylic acids, e.g.
   - N,N'-di-C₅-C₈-cycloalkyl-2,6-naphthalene dicarboxamide compounds such as N,N'-dicyclohexyl-2,6-naphthalene dicarboxamide and N,N'-dicyclooctyl-2,6-naphthalene dicarboxamide,
   - N,N'-di-C₅-C₈-cycloalkyl-4,4-biphenyldicarboxamide compounds such as N,N'-dicyclohexyl-4,4-biphenyldicarboxamide and N,N'-dicyclopentyl-4,4-biphenyldicarboxamide,
   - N,N'-di-C₅-C₈-cydoalkyl-terephthalamide compounds such as N,N'-dicyclohexylterephthalamide and N,N'-dicyclopentylterephthalamide,
   - N,N'-di-C₅-C₈-cycloalkyl-1,4-cyclohexanedicarboxamide compounds such as N,N'-dicyclo-hexyl-1,4-cyclohexanedicarboxamide and N,N'-dicyclohexyl-1,4-cyclopentanedicarboxamide,
- diamine derivative type diamide compounds from C₅-C₈-cycloalkyl monocarboxylic acids or C₆-C₁₂-aromatic monocarboxylic acids and C₅-C₈-cycloaliphatic or C₆-C₁₂₋aromatic diamines, e.g.
   - N,N'-C₆-C₁₂-arylene-bis-benzamide compounds such as N,N'-p-phenylene-bis-benzamide and N,N'-1,5-naphthalene-bis-benzamide,
   - N,N'-C₅-C₈-cycloalkyl-bis-benzamide compounds such as N,N'-1,4-cyclopentane-bis-benzamide and N,N'-1,4-cyclohexane-bis-benzamide,
   - N,N'-p-C₆-C₁₂-arylene-bis-C₅-C₈-cycloalkylcarboxamide compounds such as N,N'-1,5-naphthalene-bis-cyclohexanecarboxamide and N,N'-1,4-phenylene-bis-cyclohexanecarboxamide, and
   - N,N'-C₅-C₈-cycloalkyl-bis-cyclohexanecarboxamide compounds such as N,N'-1,4-cyclopentane-bis-cyclohexanecarboxamide and N,N'-1,4-cyclohexane-bis-cyclohexanecarboxamide,
- amino acid derivative type diamide compounds from amidation reaction of C₅-C₈₋alkyl, C₅-C₈-cycloalkyl- or C₆-C₁₂-arylamino acids, C₅-C₈-alkyl-, C₅-C₈-cydoalkyl- or C₆-C₁₂-aromatic monocarboxylic acid chlorides and C₅-C₈-alkyl-, C₅-C₈-cycloalkyl- or C₆-C₁₂-aromatic mono-amines, e.g.
   - N-phenyl-5-(N-benzoylamino)pentane amide and N-cyclohexyl-4-(N-cyclohexyl-carbonylamino)benzamide.

Further suitable β-nucleating agents are
- quinacridone type compounds, e.g. quinacridone, dimethylquinacridone and dimethoxyquinacridone,
- quinacridonequinone type compounds, e.g. quinacridonequinone, a mixed crystal of 5,12-dihydro(2,3b)acridine-7,14-dione with quino(2,3b)acridine-6,7,13,14-(5H,12H)-tetrone and dimethoxyquinacridonequinone and
- dihydroquinacridone type compounds, e.g. dihydroquinacridone, dimethoxydihydroquinacridone and dibenzodihydroquinacridone.

Still further suitable β-nucleating agents are
- dicarboxylic acid salts of metals from group lla of periodic table, e.g. pimelic acid calcium salt and suberic acid calcium salt; and
- mixtures of dicarboxylic acids and salts of metals from group lla of the periodic table.

Still further suitable β-nucleating agents are
- salts of metals from group lla of periodic system and imido acids of the formula 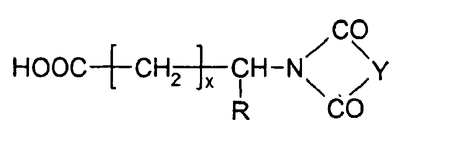
wherein x = 0 to 4; R = H, -COOH, C₁-C₁₂-alkyl, C₅-C₈-cycloalkyl or C₆-C₁₂₋aryl, and Y = C₁-C₁₂-alkyl, C₅-C₈-cycloalkyl or C₆-C₁₂-aryl - substituted bivalent C₆-C₁₂-aromatic residues, e.g.
calcium salts of phthaloylglycine, hexahydrophthaloylglycine, N-phthaloylalanine, phthalimidoacetate and/or N-4-methylphthaloylglycine.

Preferred β-nucleating agents are any one or mixtures of N,N'-dicyclohexyl-2,6-naphtalene dicarboxamide, the β-nucleating agents of EP 177961 and those of EP 682066.

Particularly preferred β-nucleating agents are any one or mixtures of a mixed crystal of 5,12-dihydro-quino(2,3-b)acridine-7,14-dione with quino(2,3-b)acridine-6,7,13,14(5H, 12H)-tetrone, N,N'-dicyclohexyl-2,6-naphtalene dicarboxamide and salts of dicarboxylic acids with at least 7 carbon atoms with metals of group 11a of the periodic table, preferably calcium pimelate.

A further object of the invention is a process for producing the polyolefin compositions of the present invention.

This object is achieved by mixing a heterophasic propylene copolymer containing
a) 50 - 95 wt% of a matrix phase comprising a propylene homopolymer or a propylene copolymer with up to 5 mol% of ethylene and/or at least one C₄-C₈ α-olefin and
b) 5 - 50 wt% of a disperse phase comprising an ethylene rubber copolymer with from 20 - 80 mol% ethylene and from 80 - 20 mol% of at least one C₃-C₈ α-olefin and where the intrinsic viscosity of the XCS-fraction of the heterophasic copolymer is s 2 dl/g
with an effective amount of a β-nucleating agent,
melting and homogenising the mixture and
cooling and crystallising the mixture.

Whether a certain amount of a β-nucleating agent is effective, is known to the skilled person. Examples of effective amounts of β-nucleating agents are given in EP 177961 and EP 682066 and are for example from 5 x 10⁻⁸ for certain high active β-nucleating agents (e.g. that of EP 177961) up to 2.0 wt%. A preferred amount of β-nucleating agent is from 0.0001 to 2.0 wt% based on the propylene copolymer used.

The polyolefin composition of the present invention is preferably produced by melt mixing the heterophasic propylene copolymer base resin with 0.0001 to 2.0 wt% based on the propylene copolymer used, of β-nucleating agent(s), optionally adding conventional additives and/or stabilisers and/or fillers, at temperatures from 175 to 250 °C and cooling and crystallising the melt according to procedures which are state of the art.

The heterophasic propylene copolymer may be produced by multistage process polymerisation of propylene or propylene and ethylene and/or an α-olefin such as bulk polymerisation, gas phase polymerisation, slurry polymerisation, solution polymerisation or combinations thereof using conventional catalysts. Those processes are well known to one skilled in the art.

A preferred process is a combination of a bulk slurry loop reactor(s) and gas phase reactor(s). The matrix polymer can be made either in loop reactors or in a combination of loop and gas phase reactor.

The polymer produced in this way is transferred into another reactor and the disperse phase, which in this case is a propylene/α-olefin rubber, is polymerised. Preferably this polymerisation step is done in a gas phase polymerisation.

A suitable catalyst for the polymerisation of the heterophasic copolymer is any stereospecific catalyst for propylene polymerisation which is capable of polymerising and copolymerising propylene and comonomers at a temperature of 40 to 110°C and at a pressure form 10 to 100 bar. Ziegler Natta catalysts as well as metallocene catalysts are suitable catalysts.

One skilled in the art is aware of the various possibilities to produce such heterophasic systems and will simply find out a suitable procedure to produce suitable heterophasic polymer systems which are used in the present invention.

The heterophasic propylene copoylmer may also be produced by mixing and melt blending a propylene homopolymer with an ethylene rubber copolymer.

The invention further relates to the use of hereinbefore described polyolefin compositions for producing articles, which articles are meeting simultaneosly high requirements regarding impact strength at low temperatures and gloss.

More particularly, a further object of the present invention is to use hereinbefore described polyolefin compositions for producing articles having
a) a gloss of ≥ 60 % and
b) a Charpy notched impact strength at -20°C which is at least 1.0 kJ/m², preferably at least 1.5 kJ/m², higher than the Charpy notched impact strength at -20 °C of a test article produced from the identical polyolefin composition but containing no β-nucleating agent.

It is preferred, that with using the herein described polyolefin compositions, articles are obtained, which have a Charpy notched impact strength at -20 °C of at least 3.0 kJ/m², preferably of at least 3.5 kJ/m².

It is a further object of the present invention to use herein before described polyolefin compositions, which additionally contain up to 7 wt%, preferably from 1 - 5 wt%, based on the total weight of the polyolefin composition of fillers for enhancing stiffness, for the production of articles having a flexural modulus which is at least as high as the flexural modulus of a test article produced from the identical polyolefin composition but containing no β-nucleating agent and no stiffness-enhancing filler.

The compositions of the present invention may further comprise conventional additives, such as antioxidants, stabilisers, acid scavengers, clarifying agents, coloring agents, anti-UV agents, antistatic agents, slip/mould release agents, etc.

### Description of measurement methods

### XCS

Xylene cold solubles were determined at 23 °C according ISO 6427. Xylene solubles are defined as the percent by weight that stays in solution after the polymer sample is dissolved in hot xylene and the solution is allowed to cool to 23 °C. XCS largely correlates to the rubber content of the heterophasic copolymer.

### MFR

The melt flow rates were measured with a load of 2.16 kg at 230 °C. The melt flow rate is that quantity of polymer in grams which the test apparatus standardised to ISO 1133 extrudes within 10 minutes at a temperature of 230 °C under a weight of 2.16 kg.

### Flexural test

The flexural test was carried out according to the method of ISO 178 by using injection moulded test specimens as described in EN ISO 1873-2 (80 x 10 x 4 mm).

### Charpy notched impact strength

The Charpy notched impact strength was determined according to ISO 179 / 1eA at 23 °C and at -20 °C by using injection moulded test specimens as described in EN ISO 1873-2 (80 x 10 x 4 mm).

### Intrinsic Viscosity

Intrinsic Viscosity was measured according to DIN ISO 1628-1 (October 1999) in Decalin at 135 °C.

### Gloss

Gloss was determined according to DIN 67530 on injection moulded test plaques (60 x 60 x 2 mm) at an angle of 20°.

### Examples

### Heterophasic polymers:

The heterophasic polymers were produced in a two step process. In the first step a propylene homopolymer was polymerised (polymerisation in a loop reactor in liquid propylene) and in the second stage a propylene/ethylene rubber was polymerised in a gas phase reactor. As catalyst a Ziegler-Natta catalyst was used.

The characteristics of the heterophasic polymers are given in table 1a.

**Table 1a**

| **polymer** | **polymer split** | | **MFR1** | **XCS1** | **MFR2** | **XCS2** | **C2** | **C3/** | **IV/** |
|---|---|---|---|---|---|---|---|---|---|
| | **Loop** | **gas phase** | | | | | **total** | **XCS2** | **XCS2** |
| | [wt%] | [wt%] | [g/10'] | [wt%] | [g/10'] | [wt%] | [mol%] | [wt%] | [dl/g] |
| polymer 1 | 89 | 11 | 2.5 | 2.4 | 3 | 13 | 11.2 | 55.5 | 1.4 |
| polymer 2 | 86.5 | 13.5 | 2.8 | 2.6 | 1.7 | 11.9 | 8.9 | 56.5 | 3.2 |
| polymer 3 | 92.5 | 7.5 | 4.6 | 1.1 | 4.6 | 9.5 | 5.2 | 62 | 1.3 |
| polymer 4 | 84 | 16 | 4.3 | 2 | 4.3 | 12.2 | 8.9 | 55.5 | 1.4 |
| polymer 5 | 93 | 7 | 26.2 | 1.6 | 20.5 | 7.9 | 4 | 57.5 | 1.7 |
| polymer 6 | 75 | 25 | 45 | 2.9 | 25.5 | 13 | 22.1 | 50 | 1.5 |
| polymer 7 | 74 | 26 | 43 | 2.9 | 13.5 | 22.2 | 22.6 | 50.5 | 2.9 |

| | | | | | | | | | |
|---|---|---|---|---|---|---|---|---|---|
| MFR1: Melt Flow Rate of the matrix phase of the heterophasic copolymer | | | | | | | | | |
| XCS1: xylene cold soluble fraction of matrix phase of the heterophasic copolymer | | | | | | | | | |
| MFR2: Melt Flow Rate of the heterophasic copolymer | | | | | | | | | |
| XCS2: xylene cold soluble fraction of the heterophasic copolymer | | | | | | | | | |
| C2 total: total ethylene content of the heterophasic copolymer | | | | | | | | | |
| C3/XCS2: propylene content of the xylene cold soluble fraction of the heterophasic copolymer | | | | | | | | | |
| IV/XCS2: Intrinsic viscosity of the xylene cold soluble fraction of the heterophasic copolymer | | | | | | | | | |

Additional heterophasic polymers were prepared by mixing and melt blending a propylene homopolymer with different amounts of Engage EG 8400, an ethylene 1-octene rubber, which is commercially available from The Dow Chemical Company.
The characteristics of these additional polymers are given in table 1b.

**Table 1b**

| **polymer** | **MFR homo** [g/10min] | **amount rubber** [wt%] | **rubber comonomer** | **comonomer content** [wt%] | **IV (rubber)** [dl/g] | **MFR2** [g/10min] |
|---|---|---|---|---|---|---|
| polymer 8 | 2.25 | 10 | 1-octene | 24 | 0.9 | 3.7 |
| polymer 9 | 2.25 | 1.5 | 1-octene | 24 | 0.9 | 4.4 |

### Calciumpimelate

1 Mol of pimelic acid was reacted with 1 mol calciumcarbonate in a mixture of ethanol and water at 60 - 80 °C. The produced calciumpimelate was filtered and dried.

Polymers 1 - 9 of tables 1a and 1b were were mixed with conventional additives (0.1 % Irgafos 168, 0.1 % Irganox 1010, 0.1 % Ca-stearate, 0.3 % Glycerol monostearate) and the respective amounts of nucleating agent and talc in an intensive mixer (Henschel mixer) for 20 seconds.

The compositions were compounded in a twin screw extruder at a temperature of 250°C. The strands were quenched in cold water and pelletized.

Injection molded test bars were produced and the Charpy notched impact strength according to ISO 179 and the flexural modulus according to ISO 178 were measured.

For determining optical properties, i.e. gloss, injection moulded plaques (60 x 60 x 2 mm) were produced. Gloss of the injection moulded plaques was measured according to DIN 67 530.

The results are shown in table 2

**Table2**

| **example** | **polymer** | **β-nucleating agent** | | | | | | | | | |
|---|---|---|---|---|---|---|---|---|---|---|---|
| | | **amount [Wt%l** | | **agent** | **Talc [wt%]** | | **MFR [g/10min]** | **NIS 23 °C [kJ/m**^{**2**}**]** | **NIS -20 °C [kJ/m**^{**2**}**]** | **Flex.Mod. [MPa]** | **Gloss 1%]** |
| 1 | 1 | - | | - | - | | 3 | 6.4 | 1.9 | 1204 | 65.0 |
| 2 | 1 | | 0.1 | Ca Pim | - | | 3 | 36.6 | 4.8 | 1025 | 66.0 |
| 3 | 1 | | 0.1 | Ca Pim | | 3 | 2.9 | 23.9 | 4.3 | 1237 | 62.0 |
| comp. 4 | 2 | - | | - | - | | 2.2 | 11.3 | 3.7 | 1127 | 25.0 |
| comp. 5 | 2 | | 0.1 | Ca Pim | - | | 2.2 | 24.5 | 5.2 | 1031 | 23.6 |
| 6 | 3 | - | | - | - | | 4.6 | 5.0 | 1.1 | 1276 | 77.7 |
| 7 | 3 | - | | - | | 2 | 4.7 | 5.5 | 1.4 | 1565 | 73.4 |
| 8 | 3 | | 0.1 | Ca Pim | | 2 | 4.9 | 14.1 | 3.0 | 1293 | 74.0 |
| 9 | 4 | - | | - | - | | 4.7 | 5.8 | 1.5 | 1043 | 73.0 |
| 10 | 4 | | 0.1 | Ca Pim | | 2 | 4.2 | 20.4 | 3.0 | 1102 | 72.2 |
| 11 | 4 | | 0.1 | NU 100 | | 2 | 4.7 | 12.1 | 2.8 | 1181 | 71.2 |
| comp. 12 | 5 | - | | - | - | | 20.5 | 2.5 | 1.0 | 1855 | 68.3 |
| comp. 13 | 5 | | 0.1 | Ca Pim | - | | 19.8 | 3.5 | 1.0 | 1715 | 68.7 |
| 14 | 6 | - | | - | - | | 25.5 | 4.8 | 2.7 | 1013 | 65.0 |
| 15 | 6 | | 0.1 | Ca Pim | - | | 26 | 7.1 | 3.8 | 891 | 63.0 |
| comp. 16 | 7 | - | | | - | | 13.5 | 10.8 | 6.0 | 1018 | 17.0 |
| comp. 17 | 7 | | 0.1 | Ca Pim | - | | 13.6 | 14.3 | 6.2 | 904 | 16.5 |
| 18 | 8 | - | | - | - | | 3.7 | 7.5 | 1.1 | 1100 | 58.0 |
| 19 | 8 | | 0.1 | Ca Pim | - | | 3.7 | 30.6 | 3.5 | 950 | 63.0 |
| 20 | 9 | - | | - | - | | 4.4 | 8.6 | 1.7 | 1002 | 54.0 |
| 21 | 9 | | 0.1 | Ca Pim | - | | 4.4 | 39.9 | 4.7 | 840 | 65.0 |

| | | | | | | | | | | | |
|---|---|---|---|---|---|---|---|---|---|---|---|
| MFR: MFR of the composition | | | | | | | | | | | |
| Ca Pim: Calcium pimelate | | | | | | | | | | | |
| NU 100: N,N'-dicyclohexyl-2,6-naphtalene dicarboxamide | | | | | | | | | | | |
| NIS 23 °C: Charpy notched impact strength acc. to ISO 179 eA at 23 °C | | | | | | | | | | | |
| NIS -20 °C: Charpy notched impact strength acc. to ISO 179 eA at -20 °C | | | | | | | | | | | |
| Flex.Mod.: Flexural Modulus acc. to ISO 178 | | | | | | | | | | | |

## Claims

1. Polyolefin composition with high impact strength and high gloss, comprising
A) a heterophasic propylene copolymer containing
a) 50 - 95 wt% of a matrix phase comprising a propylene homopolymer or a propylene copolymer with up to 5 mol% of at least one C₄-C₈ α-olefin and/or ethylene and
b) 5-50 wt% of a disperse phase comprising an ethylene rubber copolymer with from 20 - 80 mol% ethylene and from 80 - 20 mol% of at least one C₃-C₈ α-olefin and where the intrinsic viscosity (measured according to DIN ISO 1628-1) of the XCS-fraction (the fraction soluble in xylene at 23 °C according to ISO 6427) of the heterophasic copolymer is ≤ 2 dl/g and
B) a β-nucleating agent.

2. Polyolefin composition according to claim 1, **characterised in that** the ethylene rubber copolymer is an ethylene propylene rubber (EPR).

3. Polyolefin composition according to one of claims 1 or 2, **characterised in that** the heterophasic propylene copolymer contains 7 - 25 wt%, preferably 9 -20 wt% of the ethylene rubber copolymer.

4. Polyolefin composition according to one of claims 1 to 3, **characterised in that** it has a MFR (according to ISO 1133) of from 1 - 30 g/10 min (230 °C, 2.16 kg), preferably 2.5 - 10 g/10 min (230 °C, 2.16 kg).

5. Polyolefin composition according to one of claims 1 to 4, **characterised in that** the intrinsic viscosity of the XCS-fraction of the heterophasic copolymer is from 0.9 - 1.8 dl/g.

6. Polyolefin composition according to one of claims 1 to 5, **characterised in that** it comprises up to 7 wt%, preferably from 1 - 5 wt%, based on the total weight of the polyolefin composition of fillers for enhancing stiffness.

7. Polyolefin composition according to one of claims 1 to 6, **characterised in that** the β-nucleating agent comprises any one or mixtures of a mixed crystal of 5,12-dihydroquino(2,3-b)acridine-7,14-dione with quino(2,3-b)acridine-6,7,13,14(5H, 12H)-tetrone, N,N'-dicyclohexyl-2,6-naphtalene dicarboxamide and salts of dicarboxylic acids with at least 7 carbon atoms with metals of group lla of the periodic table, preferably calcium pimelate.

8. Process for producing a polyolefin composition according to one of claims 1 to 7, **characterised by** mixing a heterophasic propylene copolymer containing
a) 50 - 95 wt% of a matrix phase comprising a propylene homopolymer or a propylene copolymer with up to 5 mol% of at least one C₄-C₈ α-olefin and/or ethylene and
b) 5 - 50 wt% of a disperse phase comprising an ethylene rubber copolymer with from 20 - 80 mol% ethylene and from 80 - 20 mol% of at least one C₃-C₈ α-olefin and where the intrinsic viscosity (measured according to DIN ISO 1628-1) of the XCS-fraction (the fraction soluble in xylene at 23 °C according to ISO 6427) of the heterophasic copolymer is s 2 dl/g
with an effective amount of a β-nucleating agent,
melting and homogenising the mixture and
cooling and crystallising the mixture.

9. Use of a polyolefin composition according to any one of claims 1 to 7 for the production of articles having
a) a gloss (according to DIN 67530) of ≥60 % and
b) a Charpy notched impact strength (according to ISO 179 / 1eA) at -20 °C which is at least 1.0 kJ/m², preferably at least 1.5 kJ/m², higher than the Charpy notched impact strength at -20 °C of a test article produced from the identical polyolefin composition but containing no β-nucleating agent.

10. Use according to claim 9, **characterised in that** the articles have a notched Charpy impact strength at -20 °C of at least 3.0 kJ/m², preferably of at least 3.5 kJ/m².

11. Use according to one of claims 9 or 10 of a polyolefin composition according to claim 6 for the production of articles having a flexural modulus which is at least as high as the flexural modulus of a test article produced from the identical polyolefin composition but containing no β-nucleating agent and no stiffness-enhancing filler.

## Patentansprüche

1. Polyolefinzusammensetzung mit hoher Schlagzähigkeit und hohem Glanz, enthaltend
A) ein heterophasiges Propylencopolymer, das
a) 50-95 Gew.-% einer Matrixphase, die ein Propylenhomopolymer oder ein Propylencopolymer mit bis zu 5 Mol-% mindestens eines C₄-C₈-α-Olefins und/oder Ethylen umfaßt, und
b) 5-50 Gew.-% einer dispersen Phase, die ein Ethylenkautschukcopolymer mit 20-80 Mol-% Ethylen und 80-20 Mol-% mindestens eines C₃-C₈-α-Olefins umfaßt,
enthält, wobei die intrinsische Viskosität (gemessen gemäß DIN ISO 1628-1) der XCS-Fraktion (der bei 23°C in Xylol löslichen Fraktion gemäß ISO 6427) des heterophasigen Copolymers ≤ 2 dl/g ist, und
B) ein β-Nukleierungsmittel.

2. Polyolefinzusammensetzung nach Anspruch 1, **dadurch gekennzeichnet, daß** es sich bei dem Ethylenkautschukcopolymer um einen Ethylen-Propylen-Kautschuk (EPR) handelt.

3. Polyolefinzusammensetzung nach Anspruch 1 oder 2, **dadurch gekennzeichnet, daß** das heterophasige Propylencopolymer 7-25 Gew.-% und vorzugsweise 9-20 Gew.-% des Ethylenkautschukcopolymers enthält.

4. Polyolefinzusammensetzung nach einem der Ansprüche 1 bis 3, **dadurch gekennzeichnet, daß** sie eine MFR (gemäß ISO 1133) von 1-30 g/10 min (230°C, 2,16 kg) und vorzugsweise 2,5-10 g/10 min (230°C, 2,16 kg) aufweist.

5. Polyolefinzusammensetzung nach einem der Ansprüche 1 bis 4, **dadurch gekennzeichnet, daß** die intrinsische Viskosität der XCS-Fraktion des heterophasigen Copolymers 0,9-1,8 dl/g beträgt.

6. Polyolefinzusammensetzung nach einem der Ansprüche 1 bis 5, **dadurch gekennzeichnet, daß** sie bis zu 7 Gew.-% und vorzugsweise 1-5 Gew.-%, bezogen auf das Gesamtgewicht der Polyolefinzusammensetzung, Füllstoffe zur Verbesserung der Steifigkeit enthält.

7. Polyolefinzusammensetzung nach einem der Ansprüche 1 bis 6, **dadurch gekennzeichnet, daß** das β-Nukleierungsmittel einen Mischkristall von 5,12-Dihydro(2,3-b)acridin-7,14-dion mit Chino(2,3-b)acridin-6,7,13,14-(5H,12H)-tetron, N,N'-Dicyclohexyl-2,6-naphtalincarbonsäureamid und Salze aus Dicarbonsäuren mit mindestens 7 Kohlenstoffatomen und Metallen der Gruppe IIa des Periodensystems, vorzugsweise Calciumpimelat, oder Gemische davon umfaßt.

8. Verfahren zur Herstellung einer Polyolefinzusammensetzung nach einem der Ansprüche 1 bis 7, **dadurch gekennzeichnet, daß** man ein heterophasiges Propylencopolymer, das
a) 50-95 Gew.-% einer Matrixphase, die ein Propylenhomopolymer oder ein Propylencopolymer mit bis zu 5 Mol-% mindestens eines C₄-C₈-α-Olefins und/oder Ethylen umfaßt, und
b) 5-50 Gew.-% einer dispersen Phase, die ein Ethylenkautschukcopolymer mit 20-80 Mol-% Ethylen und 80-20 Mol-% mindestens eines C₃-C₈₋α-Olefins umfaßt,
enthält, wobei die intrinsische Viskosität (gemessen gemäß DIN ISO 1628-1) der XCS-Fraktion (der bei 23°C in Xylol löslichen Fraktion gemäß ISO 6427) des heterophasigen Copolymers ≤ 2 dl/g ist,
mit einer wirksamen Menge eines β-Nukleierungsmittels vermischt,
die Mischung homogenisiert und aufschmilzt und
die Mischung abkühlt und kristallisiert.

9. Verwendung einer Polyolefinzusammensetzung nach einem der Ansprüche 1 bis 7 zur Herstellung von Gegenständen mit
a) einem Glanz (gemäß DIN 67530) ≥ 60% und
b) einer Charpy-Kerbschlagzähigkeit (gemäß ISO 179/1eA) bei -20°C, die mindestens 1,0 kJ/m² und vorzugsweise mindestens 1,5 kJ/m² über der Charpy-Kerbschlagzähigkeit bei -20°C eines aus der gleichen Polyolefinzusammensetzung, aber ohne β-Nukleierungsmittel, hergestellten Prüfgegenstands liegt.

10. Verwendung nach Anspruch 9, **dadurch gekennzeichnet, daß** die Gegenstände eine Charpy-Kerbschlagzähigkeit bei -20°C von mindestens 3,0 kJ/m² und vorzugsweise mindestens 3,5 kJ/m² aufweisen.

11. Verwendung nach Anspruch 9 oder 10 einer Polyolefinzusammensetzung gemäß Anspruch 6 zur Herstellung von Gegenständen mit einem Biegemodul, der mindestens genauso groß ist wie der Biegemodul eines aus der gleichen Polyolefinzusammensetzung, aber ohne β-Nukleierungsmittel und steifigkeitserhöhenden Füllstoff, hergestellten Prüfgegenstands.

## Revendications

1. Composition polyoléfinique qui a une résilience élevée et un brillant élevé comprenant
A) un copolymère hétérophasique à base de propylène contenant
a) de 50 à 95 % en poids d'une phase matricielle comprenant un homopolymère à base de propylène ou un copolymère à base de propylène avec jusqu'à 5 % en moles d'au moins une α-oléfine en C₄ à C₈ et/ou d'éthylène, et
b) de 5 à 50 % en poids d'une phase dispersée comprenant un copolymère élastomère à base d'éthylène avec de 20 à 80 % en moles d'éthylène et de 80 à 20 % en moles d'au moins une α-oléfine en C₃ à C₈ et où la viscosité intrinsèque (mesurée selon la norme DIN ISO 1628-1) de la fraction XCS (la fraction soluble dans le xylène à 23°C selon la norme ISO 6427) du copolymère hétérophasique est ≤ à 2 dl/g, et
B) un agent de β-nucléation.

2. Composition polyoléfinique selon la revendication 1, **caractérisée en ce que** le copolymère élastomère à base d'éthylène est un élastomère à base d'éthylène et de propylène (EPR).

3. Composition polyoléfinique selon l'une des revendications 1 ou 2, **caractérisée en ce que** le copolymère hétérophasique à base de propylène contient de 7 à 25 % en poids, de préférence de 9 à 20 % en poids, du copolymère élastomère à base d'éthylène.

4. Composition polyoléfinique selon l'une des revendications 1 à 3, **caractérisée en ce qu'**elle a un MFR (selon la norme ISO 1133) allant de 1 à 30 g/10 min (230°C, 2,16 kg), de préférence de 2,5 à 10 g/10 min (230°C, 2,16 kg).

5. Composition polyoléfinique selon l'une des revendications 1 à 4, **caractérisée en ce que** la viscosité intrinsèque de la fraction XCS du copolymère hétérophasique va de 0,9 à 1,8 dl/g.

6. Composition polyoléfinique selon l'une des revendications 1 à 5, **caractérisée en ce qu'**elle comprend jusqu'à 7 % en poids, de préférence de 1 à 5 % en poids, sur la base du poids total de la composition polyoléfinique de charges pour améliorer la rigidité.

7. Composition polyoléfinique selon l'une des revendications 1 à 6, **caractérisée en ce que** l'agent de β-nucléation comprend l'un quelconque ou les mélanges d'un cristal mixte de 5,12-dihydro-quino(2,3-b)acridine-7,14-dione avec de la quino(2,3-b)acridine-6,7,13,14(5H,12H)-tétrone, de la N,N'-dicyclohexyl-2,6-naphtalène dicarboxamide et des sels d'acides dicarboxyliques comportant au moins 7 atomes de carbone avec des métaux du groupe IIa du tableau périodique, de préférence le pimélate de calcium.

8. Procédé de production d'une composition polyoléfinique selon l'une des revendications 1 à 7, **caractérisé par** le mélangeage d'un copolymère hétérophasique à base de propylène contenant
a) de 50 à 95 % en poids d'une phase matricielle comprenant un homopolymère à base de propylène ou un copolymère à base de propylène avec jusqu'à 5 % en moles d'au moins une α-oléfine en C₄ à C₈ et/ou d'éthylène, et
b) de 5 à 50 % en poids d'une phase dispersée comprenant un copolymère élastomère à base d'éthylène avec de 20 à 80 % en moles d'éthylène et de 80 à 20 % en moles d'au moins une α-oléfine en C₃ à C₈ et où la viscosité intrinsèque (mesurée selon la norme DIN ISO 1628-1) de la fraction XCS (la fraction soluble dans le xylène à 23°C selon la norme ISO 6427) du copolymère hétérophasique est ≤ à 2 dl/g
avec une quantité efficace d'un agent de β-nucléation,
la fusion et l'homogénéisation du mélange, et
le refroidissement et la cristallisation du mélange.

9. Utilisation d'une composition polyoléfinique selon l'une quelconque des revendications 1 à 7, en vue de la production d'articles ayant
a) un brillant (selon la norme DIN 67530) ≥ à 60 %, et
b) une résilience Charpy sur éprouvette entaillée (selon la norme ISO 179/1eA) à -20°C qui est d'au moins 1,0 kJ/m², de préférence d'au moins 1,5 kJ/m², supérieure à la résilience Charpy sur éprouvette entaillée à -20°C d'un article test produit à partir de la même composition polyoléfinique mais ne contenant aucun agent de β-nucléation.

10. Utilisation selon la revendication 9, **caractérisée en ce que** les articles ont une résilience Charpy sur éprouvette entaillée à -20°C d'au moins 3,0 kJ/m², de préférence d'au moins 3,5 kJ/m².

11. Utilisation selon l'une des revendications 9 ou 10 d'une composition polyoléfinique selon la revendication 6, en vue de la production d'articles ayant un module de flexion qui est au moins aussi élevé que le module de flexion d'un article test produit à partir de la même composition polyoléfinique mais ne contenant aucun agent de β-nucléation et aucune charge améliorant la rigidité.
